# FASCICULE DE BREVET EUROPEEN

(11) **EP 0 511 099 B1**
(45) Date de publication et mention de la délivrance du brevet: **27.09.1995**
(21) Numéro de dépôt: 92401149.7
(22) Date de dépôt: 23.04.1992
(51) Int. Cl.: C22C 19/05, C22F 1/10, C03B 37/04

(54) **Alliage pour centrifugeur de fibres de verre**
Legierung für Spinnkopf zur Herstellung von Glassfasern
Alloy for glass fibre spinners

(30) Priorité: 25.04.1991 FR 9105097
(43) Date de publication de la demande: 28.10.1992
(73) Titulaire: ISOVER SAINT-GOBAIN, 92400 Courbevoie (FR)
(72) Inventeur: Vasseur, Stella, F-54000 Nancy (FR)
(74) Mandataire: Le Vaguerèse, Sylvain Jacques

(56) Documents cités:
- EP-A- 0 235 075
- EP-A- 0 398 761
- FR-A- 2 459 783
- E.F.BRADLEY 'SUPERALLOYS A TECHNICAL GUIDE' 1988 , ASM INTERNATIONAL , METALS PARK OHIO, US

## Description

La présente invention concerne un alliage destiné à être utilisé pour la fabrication de centrifugeurs. Cet alliage convient particulièrement à la réalisation de centrifugeurs produisant des fibres de verre.

Un tel centrifugeur tourne autour de son axe vertical à une vitesse de l'ordre de 800 à 4000 tours/mn. Sur sa paroi périphérique est ménagée une multitude d'orifices. Une chambre de combustion annulaire adjacente au centrifugeur produit un courant de gaz descendant, longeant la paroi périphérique du centrifugeur et qui étire les filets de verre sortant des orifices afin de produire une fibre de verre de faible dimension.

Du verre fondu est introduit dans le centrifugeur et est projeté, sous l'action de la force centrifuge, vers la face interne de la paroi périphérique du centrifugeur. Le verre fondu passe par les orifices de cette paroi. Les filets de verre produits hors du centrifugeur sont alors étirés sous l'action du courant gazeux.

Les sollicitations du centrifugeur sont de trois ordres : le choc thermique lors des démarrages et arrêts, le fluage à chaud dû aux forces centrifuges, la corrosion par le verre des orifices de fibrage. A titre indicatif, les températures opérationnelles sont de l'ordre de 1000-1200°C. Ces températures sont celles pour lesquelles le verre présente une viscosité convenable.

Compte tenu des conditions opératoires particulièrement sévères, les centrifugeurs se détériorent à l'usage en un temps plus ou moins long. Ces centrifugeurs peuvent devoir être remplacés pour différentes raisons. Ce sont : la déformation de la bande de fibrage, l'apparition de fissures horizontales ou verticales, l'usure importante des orifices.

Dans la pratique, les causes les plus fréquentes de changement des centrifugeurs demeurent les déformations de la bande périphérique qui se traduisent par une détérioration de la qualité des fibres produites. Cette déformation est liée à la fois aux effets de la centrifugation sur la bande périphérique et à l'affaiblissement de cette dernière par érosion des orifices. Néanmoins, l'amélioration de la résistance à la corrosion et à la déformation ne peut être dissociée des questions concernant la fragilité de l'alliage. Il est particulièrement important d'éviter la rupture des centrifugeurs pendant leur fonctionnement. En conséquence, il est nécessaire de choisir l'alliage du centrifugeur de manière à avoir une bonne résistance à la déformation d'une part et, d'autre part, de ne pas faire en sorte qu'il soit trop fragile. Ces deux caractéristiques étant, au moins en partie contradictoires, une solution de compromis doit être retenue.

Des alliages à base de Ni et Cr pour constituer de tels centrifugeurs sont connus, notamment du brevet FR 2 459 783. Ce brevet préconise une composition d'alliage relativement précise sur les principaux constituants et notamment sur la teneur en carbone.

Les centrifugeurs constitués dans l'alliage antérieur ont présenté, dans l'ensemble, des propriétés améliorées. Globalement, ces centrifugeurs ont des durées de vie satisfaisantes. Néanmoins, des centrifugeurs parmi ceux répondant aux caractéristiques de ce document ont montré des durées de vie très inférieures à la durée de vie moyenne, sans que rien ne permette d' expliquer et donc de prévoir les raisons de ces incidents.

Devant cette situation, les inventeurs ont cherché une solution permettant d'aboutir de façon systématique à des centrifugeurs présentant les qualités de longévité recherchées. Autrement dit, les inventeurs se sont efforcés de faire disparaître tout risque de voir un centrifugeur mis hors d'usage prématurément.

Les inventeurs ont obtenu ce résultat en mettant en évidence des particularités concernant la structure de l'alliage et, en particulier, la nature et la morphologie des carbures présents dans l'alliage. Les inventeurs ont aussi déterminé des caractéristiques permettant d'aboutir à ce résultat et qui concernent la composition de l'alliage et les traitements métallurgiques mis en oeuvre lors de la fabrication du centrifugeur.

Sur la base d'alliages Ni-Cr du type de ceux de l'art antérieur cité, l'invention propose une composition comprenant en pourcentage pondéral :

| | |
|---|---|
| Cr | 27,5 - 29,5 % |
| W | 6,5 - 7,8 % |
| C | 0,69 - 0,73 % |
| Fe | 7 - 10 % |

et, optionnellement du Si et du Mn, notamment chacun dans une proportion en pourcentage pondéral de 0,6 à 0,9%. L'alliage présente en outre, dans sa structure, des carbures essentiellement secondaires de type M₂₃C₆, finement et homogènement dispersés dans la structure, ce qui permet de garantir au mieux les propriétés des centrifugeurs produits. M est le chrome et/ou au moins un métal équivalent contenu dans l'alliage, la teneur en chrome équivalent ne dépassant pas 38%.

L'invention a également pour objet le centrifugeur pour fibres de verre, qui est constitué par un tel alliage et obtenu par coulée et traitement thermique de celui-ci.

Les inventeurs ont en effet montré par des études métallurgiques, dont il sera question plus en détail à propos des exemples, que les qualités des centrifugeurs et notamment leur résistance au fluage étaient liées à la présence de carbures de nature et de morphologie bien définies. Ayant identifié ces éléments de structure de l'alliage des centrifugeurs, les inventeurs ont aussi pu mettre en évidence les conditions qui déterminent, ou au moins favorisent, la formation de ces éléments de structure.

Ainsi, dans les mécanismes qui conditionnent le contrôle du fluage du matériau constituant le centrifugeur, les inventeurs ont d'abord constaté le rôle primordial des carbures. Ceux-ci interviendraient par leur aptitude à bloquer les dislocations présentes dans le réseau métallique. Le blocage des dislocations n'intervient cependant de façon efficace que dans la mesure où les carbures en question se présentent sous une forme suffisamment ténue et bien dispersée.

Sur la base des alliages antérieurement utilisés pour leurs aptitudes à répondre aux différentes exigences, notamment de résistance mécanique et chimique aux températures considérées, les inventeurs ont montré que, dans l'alliage pour obtenir une bonne résistance au fluage, les carbures devaient être présents dans une proportion aussi élevée que possible sous la forme M₂₃C₆, M étant le Cr ou un métal équivalent (W, Si, Zr) du point de vue de la structure.

Les études des inventeurs ont montré la complexité des mécanismes conduisant à ces carbures particuliers. Ils tiennent à la diversité des phases qui apparaissent lors de la solidification de l'alliage fondu et au cours des traitements thermiques ultérieurs éventuels.

Dans la pratique, les centrifugeurs sont obtenus par moulage à partir de l'alliage fondu. Le centrifugeur moulé est habituellement l'objet d'un traitement thermique pour un réarrangement de la structure, arrangement que la solidification lors du moulage ne permet pas d'atteindre directement.

Le traitement thermique subi par l'alliage influe principalement, selon l'invention, sur l'apparition et la répartition des carbures dans la matrice.

Dans ce qui suit, on désigne par " carbures primaires " et "carbures secondaires" respectivement les carbures qui apparaissent après la coulée d'une part et après le traitement thermique d'autre part.

L'invention propose une composition d'alliage comportant une proportion en chrome et tungstène spécifiques telle que l' alliage présente, dans sa structure cristalline finale, des carbures du type M₂₃C₆, carbures qui pour les raisons que nous verrons, sont essentiellement secondaires et répartis de façon homogène dans la matrice.

De préférence selon l'invention, la teneur en chrome équivalent ne dépasse pas 38 % et, avantageusement est au plus égale à 37 % pour favoriser la formation des carbures secondaires M₂₃C₆.

Pour maintenir, par ailleurs, une bonne résistance à la corrosion à haute température, selon l'invention, la teneur en chrome équivalent n'est pas, de préférence, inférieure à 35 % et, avantageusement, n'est pas inférieure à 35,5 %.

Selon l'invention, la teneur en chrome, afin d'améliorer la résistance à la corrosion à haute température et la résistance au fluage, est comprise entre 27,5 et 29,5 % et, de préférence, entre 27,5 et 28,5 %.

Le tungstène contribue à la dureté de l'alliage et à la résistance au fluage. Sa teneur est comprise entre 6,5 et 7,8 % et, de préférence, entre 7,2 et 7,6 %.

Le carbone est un élément essentiel pour la formation des carbures. Sa teneur est comprise entre 0,69 et 0,73 %.

Du fer entre dans la composition de l'alliage en faible proportion. Il améliore la résistance à la sulfuration, les alliages à base de nickel étant très sensibles au soufre contenu dans les verres utilisés. Sa teneur est, avantageusement, comprise entre 7 et 10 %.

D'autres éléments interviennent encore éventuellement dans la composition de l'alliage, soit à l'état de traces introduits avec les éléments principaux, soit comme éléments complémentaires pour parfaire certaines propriétés.

Ainsi, selon l'invention, du silicium à faible teneur, 0,6 à 0,9 %, accroît la dureté et la résistance au fluage de l'alliage.

Une composition d'alliage préférée selon l'invention répond à la composition suivante :

| | |
|---|---|
| Ni | 54,5 - 58 % |
| Cr | 27,5 - 28,5 % |
| W | 7,2 - 7,6 % |
| C | 0,69 - 0,73 % |
| Si | 0,6 - 0,9 % |
| Mn | 0,6 - 0,9 % |
| Fe | 7 - 10 % |

Selon l'invention, un traitement thermique adéquat permet d'obtenir une répartition homogène des carbures secondaires dans la matrice métallique, faisant obstacle à la propagation de dislocation dans la matrice. Pour une bonne tenue au fluage, les inventeurs ont montré qu'il est avantageux d'avoir un grand nombre de carbures secondaires très fins, répartis de façon homogène.

Dans ce sens, les inventeurs ont constaté qu'il est préférable que la montée en température de la structure brute de solidification de l'alliage s'effectue rapidement. En effet, les inventeurs ont constaté qu'une montée en température lente conduit à une étape de germination espacée dans le temps. Les premiers germes créés croissent et peuvent coalescer en même temps que l'apparition des derniers germes. Une vitesse de montée en temperature plus rapide permet d'éviter l'existence simultanée des mécanismes de germination et une coalescence des carbures secondaires. Ensuite, le maintien, pendant un temps donné, à une température relativement élevée favorise principalement la croissance de ces carbures. Un nombre élevé de germes permet d'éviter la formation de carbures trop volumineux.

Une optimisation de ce traitement s'avère souhaitable. Il est ainsi préféré d'opérer à une température de palier pas trop élevée pour éviter la coalescence des carbures. Par ailleurs, une température de palier moins élevée, correspond à un temps de traitement plus long. Il convient donc de choisir un compromis.

Dans ce sens, il est apparu avantageux de choisir une vitesse de montée en température qui n'est pas inférieure à 3°C/mn.

Dans ce sens encore, selon l'invention, il est préférable de maintenir la température du traitement thermique inférieure à 1000°C et, de préférence, inférieure à 900°C.

La durée du traitement thermique est, dans ces conditions, d'au moins 5 h et, de préférence, d'au moins 8 h.

Une étude métallurgique poussée a permis aux inventeurs de découvrir l'influence de la composition de l'alliage, notamment de la teneur en chrome équivalent et, plus précisément de la teneur en chrome, sur la nature et la morphologie des carbures primaires d'une part (avant traitement thermique) et secondaires d'autre part (après traitement thermique).

Les inventeurs, par une technique d'analyse d'images, ont découvert, qu'après traitement thermique des alliages de composition analogue à celle du brevet FR 2 459 783 présentent des carbures secondaires de type M₂₃C₆. Cependant, la nature de ces carbures diffère d'un alliage à l'autre. Certains alliages présentent des carbures M₂₃C₆ fins. D'autres alliages possèdent des carbures M₂₃C₆ fins et des carbures M₂₃C₆ en écriture chinoise. Parfois, seuls les carbures M₂₃C₆ en écriture chinoise ont été observés.

Un rapprochement avec la composition spécifique de chacun de ces alliages a permis de découvrir que les alliages présentant un pourcentage de chrome équivalent supérieure à 38 %, possèdent soit des carbures issus du traitement thermique (carbures secondaires) du type M₂₃C₆ soit en écriture chinoise, soit fins.

Les alliages d'une composition en chrome équivalent de l'ordre de 38 % sont constitués de carbure issus du traitement thermique (carbures secondaires) de type M₂₃C₆ essentiellement fins.

La teneur en chrome équivalent a donc une influence directe sur la nature des carbures secondaires.

Les inventeurs ont, de plus, analysé la nature des carbures primaires (avant le traitement thermique) suivant la composition de l'alliage, et spécialement suivant la teneur en chrome équivalent. Ils ont constaté que les alliages de composition analogue à celle du brevet FR 2 459 783, dont la teneur en chrome équivalent est supérieure à 38 %, possèdent à la fois des carbures primaires du type M₂₃C₆ en écriture chinoise et des carbures du type M₇C₃ en fer de lance. Les alliages, dont la teneur en chrome équivalent est de l'ordre de 38 %, présentent des carbures primaires du type M₇C₃ de morphologie en fer de lance.

En combinant ces deux observations, d'une part, la nature des carbures primaires et, d'autre part, la nature des carbures secondaires en fonction de la teneur en chrome équivalent, les inventeurs ont abouti à la conclusion que la nature des carbures primaires (avant traitement thermique) conditionne la nature des carbures secondaires (après traitement thermique), à savoir :
■ les carbures primaires du type M₇C₃, en fer de lance, se transforment lors du traitement thermique (10 h à 850°C) en carbures secondaires du type M₂₃C₆ fins,
■ les carbures primaires du type M₂₃C₆, en écriture chinoise, ne subissent aucune modification quant à leur nature ou morphologie lors du traitement thermique, quel qu'il soit.

La nature des carbures primaires est elle-même directement liée à la teneur en chrome équivalent de l'alliage.

La teneur en chrome équivalent conditionne donc indirectement, par le biais de la nature des carbures primaires, la nature des carbures secondaires.

La teneur critique de chrome équivalent est de 38 %. Au-delà de cette proportion il se forme, en plus des carbures primaires du type M₇C₃ en fer de lance, des carbures primaires du type M₂₃C₆ en écriture chinoise.

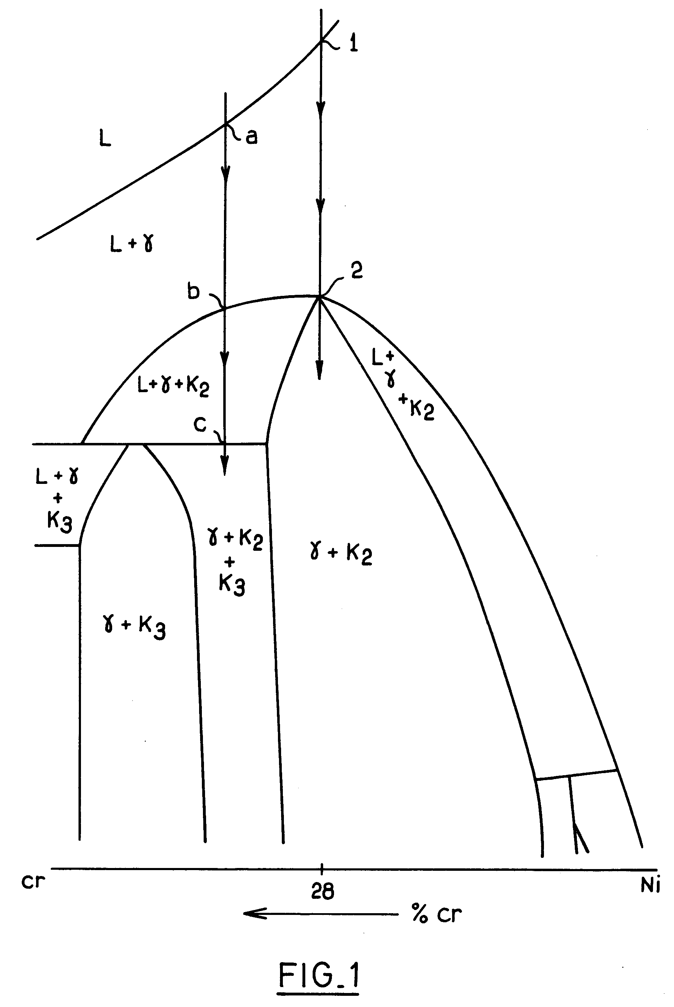

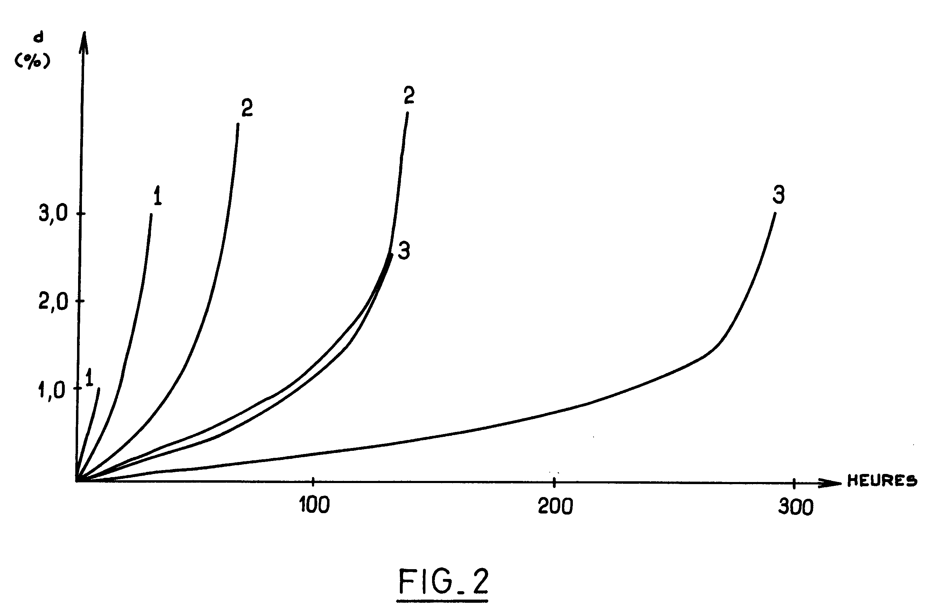

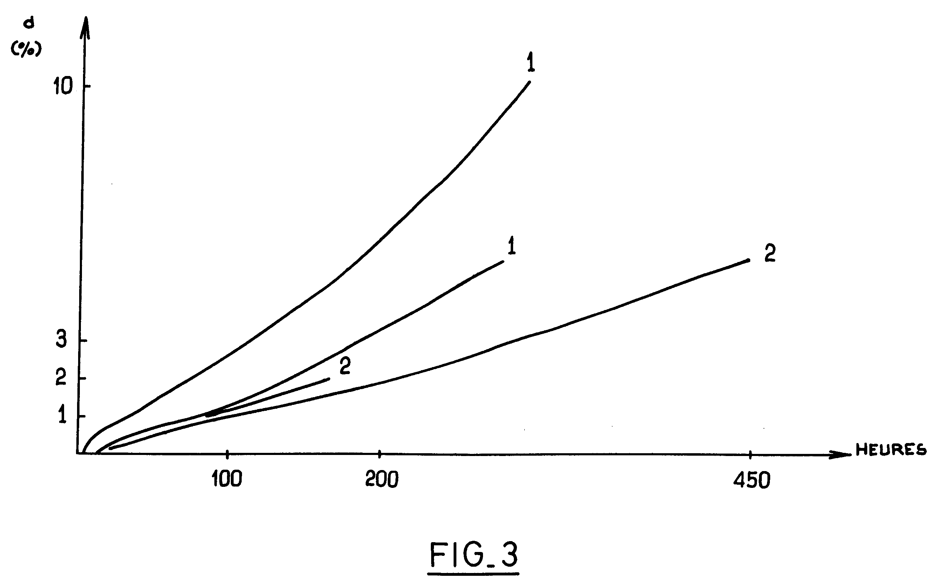

Une description plus détaillée des essais ainsi qu'une explication des modifications cristallines de l'alliage étudié en cours de refroidissement sont décrits dans la suite du texte qui fait référence aux planches de dessins dans lesquelles :
■ la figure 1 représente une coupe du diagramme pseudo-binaire Cr-Ni-C à 0,7 % de carbone,
■ la figure 2 illustre l'exemple 1. Les courbes de fluage de différentes éprouvettes se distinguant par la nature des carbures de solidification (carbures primaires) y sont regroupées,
■ la figure 3 illustre l'exemple 5. Il s'agit d'une représentation des courbes de fluage d'éprouvettes ayant subi différents traitements thermiques.

La Demanderesse a établit (figure 1) un diagramme pseudo-binaire Ni-Cr-C à 0,7 % C à partir de 90 coulées expérimentales. La composition de base de l'alliage est celle, excepté la teneur en nickel et chrome, du brevet FR 2 459 783. Pour ce faire, la technique de TSD a été employée.

Cette technique consiste à placer un barreau de l'alliage étudié dans un tube d'alumine. Un inducteur permet de fondre localement une zone de 4-5 cm. Un thermocouple est placé à ce niveau pour contrôler la température. Lorsque la zone est fondue, on tire à vitesse constante l'ensemble tube alumine plus échantillon. En sortant de la zone d'action de l'inducteur, le liquide commence à se solidifier sous un gradient connu et indépendant de la vitesse de traction. Lorsqu'une longueur suffisante s'est solidifiée unidirectionnellement, l'ensemble est refroidi à 70°C/s dans une boite à eau. Les zones liquides avant ce refroidissement brutal sont figées avec une structure très fine les distinguant facilement des parties déjà solides avant ce refroidissement brutal.

Le diagramme pseudo-binaire Cr-Ni-C est établi à partir d'une composition fixe où seuls les taux de chrome et nickel varient. Les teneurs des éléments, autres que le chrome et le nickel sont, en pourcentages pondéraux :

| | |
|---|---|
| carbone | 0,7 % |
| tungstène | 7,2 - 7,6 % |
| silicium | 0,6 - 0,9 % |
| manganèse | 0,6 - 0,9 % |

le reste étant constitué principalement de fer.

Ce diagramme permet de donner une indication qualitative quant à la nature des phases présentes dans l'alliage en fonction de la teneur en chrome, nickel et de la température de l'alliage.

On constate l'existence d'un maximum relatif au domaine : liquide + la phase γ (matrice austénitique) + carbures du type M₇C₃ - (K₂ + L + γ) - pour une teneur en chrome de l'ordre de 28 %, M₇C₃ = Cr₆(Fe,Ni)_{0,8} W_{0,2} C₃, en fer de lance.

Grâce à ce diagramme de phases, on peut suivre l'évolution de la nature des phases présentes d'une composition en phase liquide lors de sa solidification.

On peut, par exemple, choisir la composition remarquable de l'ordre de 28 % de chrome, et suivre l'évolution des phases présentes lors d'un refroidissement du liquide jusqu'à sa solidification.

On constate les transformations suivantes (figure 1) :
■ au point 1, une partie du liquide se transforme en phase austénitique :

   L --> L + γ (phases présentes : L + γ).

Si l'on continue de refroidir, le reste du liquide va se transformer au point 2, en phase K₂, soit M₇C₃ = Cr₆(Fe,Ni)_{0,8} W_{0,2} C₃ :

L --> K₂ (phases présentes : K₂ + γ).

Si l'on se place maintenant à une teneur en chrome, supérieure à environ 28 %, la phase liquide correspondante, lors de son refroidissement, subit les transformations suivantes (figure 1) :
■ au point a, comme précédemment, une partie de la phase liquide se transforme en phase austénitique (γ) :

   L --> γ (phases présentes : L + γ),
■ au point b, une partie de la phase liquide restante se transforme en phase K₂ (M₇C₃) :

   L --> K₂ (phases présentes : L + γ + K₂).
■ Il existe une transformation supplémentaire, point c, par rapport à la teneur idéale à 28 % de chrome, qui correspond à une transformation péritectique. Le reste de la phase liquide se transforme en phases K₂ et K₃ situées de part et d'autre du point c :

   L --> K₂ + K₃ (phases présentes : γ + K₂ + K₃).

K₃ est du type M₂₃C₆ avec M₂₃C₆ = Cr₁₇(Fe,Ni)₅ W₁ C₆, en écriture chinoise.

Suivant la teneur en chrome présente dans l'alliage, il peut donc y avoir apparition de la phase M₂₃C₆.

Si l'on dépasse la teneur critique en chrome d'environ 28 %, la structure brute de solidification présente des carbures primaires de type M₇C₃ et de type M₂₃C₆.

Pour une teneur en chrome égale à 28 %, la structure brute de solidification présente des carbures primaires essentiellement de type M₇C₃ (Cr₆(Fe,Ni)_{0,8} W_{0,2} C₃).

Pour une teneur en chrome inférieure à cette valeur, de nouvelles phases apparaissent.

La nature des phases a été identifiée par analyse d'images.

D'après ce diagramme, la teneur en chrome de l'alliage étudié joue un rôle primordial sur la nature et la morphologie des carbures primaires.

Ce résultat est en parfaite concordance avec les résultats précédents, à savoir l'influence de la teneur en chrome équivalent sur la nature des carbures primaires. En effet, les métaux dits chrome équivalent comprennent principalement du chrome et des métaux dits équivalents au chrome. L'influence de ces métaux dits équivalents, tel le tungstène, n'est pas négligeable sur la nature des carbures primaires présents dans l'alliage.

Ainsi, les inventeurs ont mis en évidence la présence occasionnelle de quelques zones plus riches en chrome ou tungstène à l'intérieur de la structure de l'alliage traité. Des ségrégations apparaissent alors provoquant la précipitation de carbures primaires du type M₂₃C₆. Les inventeurs expliquent cette inhomogénéité en chrome ou tungstène par un enrichissement lors de la solidification du liquide résiduel en ces éléments. Aussi, nous limitons la teneur en chrome, de façon préférentielle, à 28,5 % pour être certain de ne pas précipiter des carbures M₂₃C₆ primaires.

Le traitement thermique ultérieur ne modifie pas la morphologie des carbures primaires. Les conditions d'élaboration, telles la vitesse de solidification conditionnée, par exemple, par la température de coulée, peuvent intervenir, en plus de la composition de l'alliage, sur la nature et la morphologie des carbures primaires.

Les inventeurs on effectué différents essais afin de corréler leurs observations quant à la nature et à la morphologie des carbures primaires et secondaires avec la tenue au fluage de l'alliage, test significatif de la durée de vie d'un centrifugeur.

Ainsi, les inventeurs ont trouvé que la nature des carbures secondaires influe très nettement sur la tenue au fluage de l'alliage.

La présence de carbures secondaires à grains fins, issus de carbures primaires de type M₇C₃ en fer de lance, confère à l'alliage une bonne tenue au fluage. Au contraire, la présence de carbures secondaires en écriture chinoise, carbures plus volumineux, confère une mauvaise tenue au fluage de l'alliage.

Une explication possible de cette constatation est que le fluage est dû à une propagation de dislocations à travers l'alliage. Pour empêcher ces dislocations de se propager, des carbures secondaires fins sont plus efficaces que des carbures plus volumineux. En effet des carbures fins, plus nombreux, peuvent facilement se disperser à travers tout l'alliage.

Les carbures en écriture chinoise, plus volumineux, ne font pas obstacle aussi facilement aux propagations de dislocations. Ces dernières peuvent aisément contourner ces éventuels obstacles et continuer à se propager.

Des carbures secondaires fins et répartis de façon homogène dans la matrice de l'alliage vont donc donner une meilleure tenue au fluage que des carbures plus volumineux, répartis de manière inhomogène.

A la vue de ces résultats, les inventeurs ont alors cherché à optimiser le traitement thermique subi par les alliages. En effet, les carbures primaires se transforment, au cours du traitement thermique, en carbures secondaires.

Les inventeurs ont mis en évidence l'influence, d'une part, de la vitesse de montée en température sur la germination des carbures secondaires et, d'autre part, l'influence du temps et de la température de palier sur la croissance de ces carbures secondaires.

Une vitesse de montée en température relativement élevée évite la présence simultanée des phases de germination et une coalescence des carbures secondaires. La croissance de ces derniers est facilitée par une température de palier moins élevée. Par contre, pour obtenir une taille de carbures convenable, le temps de maintien en température est d'autant plus long que la température de palier est basse. Il est nécessaire de trouver un compromis entre ces deux paramètres.

L'exemple 1 illustre l'influence de la composition de l'alliage sur la teneur au fluage. Les exemples 2 à 5 montrent l'influence des paramètres temps et température sur la répartition des carbures dans la matrice.

### EXEMPLE 1

Trois séries d'éprouvettes ont été élaborées afin de tester leur tenue au fluage. Ces éprouvettes sont soumises à une force de traction de 35 MPa à 1000°C, leur déformation est mesurée en fonction du temps. Ces trois séries possèdent, respectivement, trois teneurs en chrome équivalent différentes. Elles ont subi un traitement thermigue de 10 h à 850°C.

La figure 2 établit la corrélation entre la teneur en chrome équivalent et la tenue au fluage de l'alliage.

L'axe des abscisses correspond au temps en heures ; l'axe des ordonnées représente la déformation de l'éprouvette en pourcentage. Cette courbe de fluage (temps-déformation) est un moyen pratique de guantifier le test de durée de vie d'un centrifugeur constitué d'un alliage d'une composition donnée.

Pour chaque série d'éprouvettes, on obtient un faisceau délimité par deux courbes correspondant à la tenue au fluage d'éprouvettes d'une composition donnée.

Les faisceaux délimités par les courbes 1, 2 et 3 correspondent, respectivement, à une teneur en chrome équivalent de : 38 %, 39,2 % et 41,1 %.

| Composition | | | Nature des carbures primaires | Déformation à la rupture (%) | Temps à la rupture (h) |
|---|---|---|---|---|---|
| Cr (%) | W (%) | Cr_{eq} (%) | | | |
| 29 | 8,7 | 38 | 100 % M₇C₃ | 3-4 | 300 |
| 30,7 | 7,6 | 39,2 | 50 % M₂₃C₆ | | |
| | | | 50 % M₇C₃ | 4 | 60 à 130 |
| 31 | 9,1 | 41,1 | 100 % M₂₃C₆ | 3 | < 30 |

On rappelle que Cr_{eq} = Cr + W + Si + Nb.

La nature des carbures ainsi que leur répartition ont été identifiées par analyse d'images.

Les meilleurs résultats correspondent à une déformation minimale pour un temps maximum.

Selon ces résultats, il apparaît qu'une teneur en chrome équivalent supérieure à 38 % est néfaste à la tenue au fluage d'un tel alliage.

### EXEMPLE 2

Deux séries d'éprouvettes ont été élaborées à partir de la composition suivante :

| | |
|---|---|
| carbone | 0,69 - 0,73 % |
| tungstène | 7,2 - 7,6 % |
| chrome | 28,5 - 29,5 % |
| nickel | 54,5 - 58 % |

le reste étant constitué essentiellement de fer.

Chaque série d'éprouvettes subit une simulation thermique sur dilatomètre.

On fait varier la vitesse de montée en température, respectivement de 6°C/mn et de 1°C/mn, jusqu'à une température de 1000°C. A cette température, les éprouvettes subissent un refroidissement brutal. Les carbures sont alors analysés par analyse d'images.

Les inventeurs ont mis en évidence la germination des carbures secondaires lors de cette montée en température. La vitesse de 6°C/mn favorise une germination répartie de façon plus homogène.

### EXEMPLE 3

Différentes éprouvettes ont été confectionnées selon la composition de l'exemple 2.

Elles ont subi les traitements thermiques suivants :

| Temps de maintien | Température de maintien | Résultats |
|---|---|---|
| 10 h | 850°C | carbures secondaires fins et homogènes |
| 4 h < t < 10 h | 950°C | début coalescence |
| 4 h < t < 10 h | 1050°C | début coalescence |
| 4 h | 1190°C | forte coalescence |

Une coalescence des carbures est néfaste à la tenue au fluage ; ils ne sont alors plus dispersés de façon homogène dans la matrice. Ils forment des amas ici ou là, facilement contournables par les dislocations.

Au-delà de 850°C, plus la température est élevée, plus la coalescence des carbures secondaires est importante. Une température de maintien moins élevée procure de meilleurs résultats.

### EXEMPLE 4

L'influence du temps de maintien en température est étudiée. La température de maintien est de 1000°C.

La composition des éprouvettes est celle de l'exemple 2.

| Temps | Résultats |
|---|---|
| < 2 h | croissance des carbures secondaires |
| 4 h < t < 24 h | coalescence progressive - carbures allongés |

Un temps de maintien inférieur à 2 h est plus propice à une bonne tenue au fluage qu'un temps supérieur à cette valeur pour une température de 1000°C. En effet plus ce temps augmente, plus les carbures secondaires coalescent ne faisant plus obstacle à la propagation des dislocations, cause d'un fluage certain.

Il y a donc, d'après les exemples 3 et 4, un compromis à trouver entre le temps et la température de palier lors du traitement thermique.

### EXEMPLE 5

Différentes éprouvettes ont été élaborées à partir de la composition de l'exemple 2 et soumises à des essais de fluage. La figure 3 montre le comportement au fluage de deux séries d' éprouvettes ayant subi des traitements thermiques différents. La courbe 1 correspond à un traitement thermique de 10 h à 850°C ; une moindre déformation est obtenue par rapport aux éprouvettes ayant subi un traitement thermique de 4 h à 1000°C (courbe 2). Une température de palier moins élevée confère de meilleurs résultats. Le faisceau correspondant au traitement de 10 h à 850°C est décalé vers les temps plus importants pour des déformations moindres.

| Traitement | Vitesse de déformation (pente domaine II X 10⁴) |
|---|---|
| 4 h à 1000°C | 1.9 à 2.3 |
| 10 h à 850°C | 0.88 à 0.95 |

L'influence de la température de palier sur la tenue au fluage est plus importante que l'influence de la durée de maintien à cette température (exemples 3 et 4). Il est préférable d'opérer à une température moindre pour un temps plus long.

Ces résultats mettent en valeur l'efficacité du traitement thermique optimisé.

## Revendications

1. Alliage à base de nickel entrant dans la constitution d'un centrifugeur pour fibres de verre dont la composition contient les éléments suivants, dans des proportions en pourcentage massique :
| | |
|---|---|
| Cr | 27,5 - 29,5 % |
| W | 6,5 - 7,8 % |
| C | 0,69 - 0,73 % |
| Fe | 7 - 10 % |
et, optionnellement, du Si et du Mn, notamment chacun dans une proportion en pourcentage massique de 0,6 à 0,9%
le reste étant essentiellement du nickel et présentant, dans sa structure cristalline, des carbures de type M₂₃C₆, essentiellement secondaires, fins et répartis de façon homogène dans l'alliage, avec M représentant le chrome et/ou au moins un métal "équivalent", contenu dans l'alliage, la teneur en chrome équivalent ne dépassant pas 38%.

2. Alliage selon la revendication 1 dont la composition comporte une proportion de chrome équivalent (chrome et/ou au moins un métal équivalent) comprise entre 35 et 38 %.

3. Alliage selon la revendication 2 dont la composition comporte une proportion de chrome équivalent comprise entre 35,5 et 37 %.

4. Alliage selon l'une des revendications précédentes dont la composition est essentiellement :
| | |
|---|---|
| Ni | 54,5 - 58 % |
| Cr | 27,5 - 28,5 % |
| W | 7,2 - 7,6 % |
| C | 0,69 - 0,73 % |
| Si | 0,6 - 0,9 % |
| Mn | 0,6 - 0,9 % |
| Fe | 7 - 10 % |

5. Centrifugeur pour fibres de verre, caractérisé en ce qu'il est constitué de l'alliage selon une des revendications 1 à 4, obtenu par coulée et traitement thermique.

6. Centrifugeur selon la revendication 5, caractérisé en ce qu'après sa formation par coulée de l'alliage, il subit un traitement thermique comprenant une montée en température jusqu'à un palier, une température de palier et une durée de maintien à ce palier, choisis de façon que les carbures primaires résultant de la coulée soient essentiellement transformés en carbures secondaires, peu volumineux et répartis de façon homogène.

7. Centrifugeur selon la revendication 6 pour lequel la vitesse de montée en température est choisie suffisamment rapide afin d'éviter la présence simultanée de phases de germination et une coalescence des carbures.

8. Centrifugeur selon la revendication 6 ou 7 pour lequel la montée en température du traitement thermique s'effectue à la vitesse d'au moins 3°C/mn.

9. Centrifugeur selon l'une des revendications 6 à 8, caractérisé en ce que la température de palier de traitement thermique n'est pas supérieure à 1000°C et, de préférence, inférieure à 900°C.

10. Centrifugeur selon l'une des revendications 6 à 9 pour lequel le traitement thermique est maintenu pendant au moins 5 h à la température de palier.

11. Centrifugeur selon l'une des revendications 5 à 10 pour lequel la durée du traitement thermique est d'au moins 8 h.

## Claims

1. Nickel-based alloy used in the manufacture of a glass fibre centrifuge and of which the composition comprises the following elements given as percentages by weight:
| | |
|---|---|
| Cr | 27.5 - 29.5% |
| W | 6.5 - 7.8% |
| C | 0.69 - 0.73% |
| Fe | 7 - 10% |
and, optionally, Si and Mn, each especially in a percentage by weight of 0.6 to 0.9%,
the remainder substantially being nickel and having in its crystalline structure fine, substantially secondary M₂₃C₆ type carbides distributed homogeneously in the alloy, M being chromium and/or at least one "equivalent" metal, contained in the alloy, the content of chromium equivalent not exceeding 38%.

2. Alloy according to Claim 1, of which the composition comprises a chromium equivalent content (chromium and/or at least one equivalent metal) of between 35 and 38%.

3. Alloy according to Claim 2, of which the composition comprises a chromium equivalent content of between 35.5 and 37%.

4. Alloy according to any one of the preceding claims, of which the composition is substantially:
| | |
|---|---|
| Ni | 54.5 - 58% |
| Cr | 27.5 - 28.5% |
| W | 7.2 - 7.6% |
| C | 0.69 - 0.73% |
| Si | 0.6 - 0.9% |
| Mn | 0.6 - 0.9% |
| Fe | 7 - 10% |

5. Glass fibre centrifuge, characterised in that it is constituted by the alloy according to any one of Claims 1 to 4, obtained by casting and heat treatment.

6. Centrifuge according to Claim 5, characterised in that after it has been formed by casting the alloy, it is subjected to a heat treatment comprising an increase in temperature to a level, a level temperature and a period of maintenance at this level, selected in such a manner that the primary carbides resulting from the casting process are substantially converted into secondary carbides, which are not very bulky and are distributed homogeneously.

7. Centrifuge according to Claim 6, wherein the rate of temperature increase is selected so as to be sufficiently rapid to avoid nucleation phases and coalescence of the carbides being present simultaneously.

8. Centrifuge according to Claim 6 or 7, wherein the temperature of the heat treatment is increased at a rate of at least 3°C/mn.

9. Centrifuge according to any one of Claims 6 to 8, characterised in that the level temperature of the heat treatment is not greater than 1000°C and preferably less than 900°C.

10. Centrifuge according to any one of Claims 6 to 9, wherein the heat treatment is maintained at the level temperature for at least 5 hours.

11. Centrifuge according to any one of Claims 5 to 10, wherein the duration of the heat treatment is at least 8 hours.

## Patentansprüche

1. Legierung auf Nickelbasis, die zum Bau einer Zentrifuge für Glasfasern hinzugenommen wird, deren Zusammensetzung die folgenden Elemente in Anteilen als Hassenanteil enthält:
| | |
|---|---|
| Cr | 27,5 - 29,5 % |
| W | 6,5 - 7,8 % |
| C | 0,69 - 0,73 % |
| Fe | 7 - 10 % |
und gegebenenfalls Si und Mn, insbesondere jedes in einem Anteil als Hassenanteil von 0,6 bis 0,9 %, wobei der Rest im wesentlichen aus Nickel besteht, und die in ihrer kristallinen Struktur Carbide des Typs M₂₃C₆, im wesentlichen sekundär, fein und homogen in der Legierung verteilt, aufweist, wobei M Chrom und/oder wenigstens ein Metall-"Äquivalent" darstellt, das in der Legierung enthalten ist, wobei der Gehalt an Chrom-Äquivalent 38 % nicht übersteigt.

2. Legierung nach Anspruch 1, deren Zusammensetzung einen Anteil an Chrom-Äquivalent (Chrom und/oder wenigstens ein Metall-Äquivalent) zwischen 35 und 38 % enthält.

3. Legierung nach Anspruch 2, deren Zusammensetzung einen Anteil an Chrom-Äquivalent zwischen 35,5 und 37 % enthält.

4. Legierung nach einem der vorgenannten Ansprüche, deren Zusammensetzung im wesentlichen folgendermaßen lautet:
| | |
|---|---|
| Ni | 54,5 - 58 % |
| Cr | 27,5 - 28,5 % |
| W | 7,2 - 7,6 % |
| C | 0,69 - 0,73 % |
| Si | 0,6 - 0,9 % |
| Mn | 0,6 - 0,9 % |
| Fe | 7 - 10 % |

5. Zentrifuge für Glasfasern, dadurch gekennzeichnet, daß sie aus einer Legierung nach einem der Ansprüche 1 bis 4 aufgebaut ist, erhalten durch Gießen und Wärmebehandlung.

6. Zentrifuge nach Anspruch 5, dadurch gekennzeichnet, daß sie nach ihrer Bildung durch Gießen der Legierung einer Wärmebehandlung unterzogen wird, umfassend einen Temperaturanstieg bis zu einem Halt, eine Haltetemperatur und eine Verweildauer bei diesem Halt, die so gewählt sind, daS die primären Carbide, die sich beim Gießen ergeben, im wesentlichen in sekundäre Carbide umgewandelt werden, die weniger voluminös sind und homogen verteilt sind.

7. Zentrifuge nach Anspruch 6, für die die Geschwindigkeit des Temperaturanstiegs schnell genug gewählt wird, um das gleichzeitige Vorliegen von Keimbildungsphasen und ein Zusammenwachsen der Carbide zu vermeiden.

8. Zentrifuge nach Anspruch 6 oder 7, für die der Temperaturanstieg der Wärmebehandlung mit einer Geschwindigkeit von wenigstens 3 °C/min erfolgt.

9. Zentrifuge nach einem der Ansprüche 6 bis 8, dadurch gekennzeichnet, daß die Haltetemperatur der Wärmebehandlung nicht über 1 000 °C und vorzugsweise unter 900 °C liegt.

10. Zentrifuge nach einem der Ansprüche 6 bis 9, für die die Wärmebehandlung wenigstens 5 Stunden bei der Haltetemperatur beibehalten wird.

11. Zentrifuge nach einem der Ansprüche 5 bis 10, für die die Dauer der Wärmebehandlung wenigstens 8 Stunden beträgt.
